(19) Europäisches Patentamt
European Patent Office
Office européen des brevets

(11) **EP 4 753 280 A1**

(12) **EUROPEAN PATENT APPLICATION**
published in accordance with Art. 153(4) EPC

(43) Date of publication:
**03.06.2026 Bulletin 2026/23**

(51) International Patent Classification (IPC):
**H04N 23/80** (2023.01)

(21) Application number: **24844735.1**

(86) International application number:
**PCT/CN2024/106528**

(22) Date of filing: **19.07.2024**

(87) International publication number:
**WO 2025/021044 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 CN 202310914113**

(71) Applicant: **Vivo Mobile Communication Co., Ltd.
Dongguan, Guangdong 523863 (CN)**

(72) Inventors:
• **WANG, Haomi
Dongguan, Guangdong 523863 (CN)**
• **WU, Zenghai
Dongguan, Guangdong 523863 (CN)**

(74) Representative: **Murgitroyd & Company
165-169 Scotland Street
Glasgow G5 8PL (GB)**

(54) **IMAGE DATA PROCESSING METHOD AND APPARATUS, ELECTRONIC DEVICE, AND READABLE STORAGE MEDIUM**

(57) This application discloses an image data processing method and apparatus, an electronic device, and a readable storage medium, pertaining to the technical field of image processing. The method includes: grouping image data streams of a first image, where each group of the image data streams includes M rows of image data, or each group of the image data streams includes at least one image data block; and M is a positive integer; for each group of the image data streams, generating a read address in a case that a group of the image data is written into a corresponding storage space, where the read address is used to indicate an address in the storage space of each image data that needs to be read by blocks in the group of the image data; and reading each image data in the group of the image data from the storage space according to the read address, and writing each image data in a next group of image data into the storage space from which the image data has been read.

FIG. 1

**Description**

**CROSS-REFERENCE TO RELATED APPLICATIONS**

This application claims priority to Chinese Patent Application No. 202310914113.1, filed in China on July 24, 2023, which is incorporated herein by reference in its entirety.

**TECHNICAL FIELD**

This application pertains to the technical field of image processing, and specifically, relates to an image data processing method and apparatus, an electronic device, and a readable storage medium.

**BACKGROUND**

In the field of image processing, for better reference of neighboring pixels, it is often necessary to process image data by blocks, such as three-dimensional noise reduction algorithms, image coding and decoding, and image compression. At present, image sensors typically output video data streams in a row scanning manner. Therefore, the processing process of an ISP (image signal processor) chip involves image transformation from rows to blocks and from blocks to rows.

In the related art, during row-block conversion, in order to ensure that a real-time video data stream is not overwritten, a ping-pong buffering manner is used. Specifically, two buffer areas are used. Taking row-to-block (M×N) as an example, a to-be-converted data stream that is input by M rows is first stored in buffer area 1, and then data is read from buffer area 1 by blocks of size M×N. At the same time, subsequent continuously input M rows of data are synchronously stored row by row into buffer area 2. The above steps are repeated, with block reading and row writing being alternately performed in the two buffer areas.

Since the above manner requires consumption of space of two buffer areas, substantial storage resources are consumed, leading to high costs.

**SUMMARY**

Embodiments of this application are intended to provide an image processing method and apparatus, an electronic device, and a readable storage medium, to realize row-block conversion of image data and save storage space.

According to a first aspect, an embodiment of this application provides an image processing method. The method includes: grouping image data streams of a first image, where each group of the image data streams includes M rows of image data, or each group of the image data streams includes at least one image data block; and M is a positive integer; for each group of the image data streams, generating a read address in a case that a group of the image data is written into a corresponding storage space, where the read address is used to indicate an address in the storage space of each image data that needs to be read by blocks in the group of the image data; and reading each image data in the group of the image data from the storage space according to the read address, and writing each image data in a next group of image data into the storage space from which the image data has been read.

According to a second aspect, an embodiment of this application provides an image processing apparatus. The apparatus includes: a splitting module, a generation module, and a processing module, where: the splitting module is configured to group image data streams of a first image, where each group of the image data streams includes M rows of image data, or each group of the image data streams includes at least one image data block; and M is a positive integer; the generation module is configured to, for each group of the image data streams obtained after grouping by the splitting module, generate a read address in a case that the processing module writes a group of the image data into a corresponding storage space, where the read address is used to indicate an address in the storage space of each image data that needs to be read by blocks in the group of the image data; and the processing module is configured to read each image data in the group of the image data from the storage space according to the read address generated by the generation module, and write each image data in a next group of image data into the storage space from which the image data has been read.

According to a third aspect, an embodiment of this application provides an electronic device. The electronic device includes a processor and a memory, the memory stores a program or instructions executable on the processor, and when the program or instructions are executed by the processor, the steps of the method according to the first aspect are implemented.

According to a fourth aspect, an embodiment of this application provides a readable storage medium. The readable storage medium stores a program or instructions, and when the program or instructions are executed by a processor, the steps of the method according to the first aspect are implemented.

According to a fifth aspect, an embodiment of this application provides a chip. The chip includes a processor and a communication interface, the communication interface is coupled to the processor, and the processor is configured to run a program or instructions to implement the method according to the first aspect.

According to a sixth aspect, an embodiment of this application provides a computer program product. The program product is stored in a storage medium, and the program product is executed by at least one processor to implement the method according to the first aspect.

In the embodiments of this application, an image processing apparatus groups image data streams of a first image, where each group of the image data streams includes M rows of image data, or each group of the image data streams includes at least one image data block; and M is a positive integer; for each group of the image data streams, generates a read address in a case that a group of the image data is written into a corresponding storage space, where the read address is used to indicate an address in the storage space of each image data that needs to be read by blocks in the group of the image data; and reads each image data in the group of the image data from the storage space according to the read address, and writes each image data in a next group of image data into the storage space from which the image data has been read. Through this method, the image processing apparatus can generate a required read address, and in a case that image data is read from the storage space according to the read address, quickly write new image data at a storage position corresponding to the image data that has been read, thereby realizing alternate reading and writing of image data in one storage space. This enables efficient row writing and block reading of image data, implements row-block conversion of image data streams, and saves storage space.

**BRIEF DESCRIPTION OF DRAWINGS**

FIG. 1 is a schematic flowchart of an image data processing method according to an embodiment of this application;
FIG. 2(A) is a schematic diagram of image data obtained based on row scanning according to an embodiment of this application;
FIG. 2(B) is a schematic diagram of read addresses of image data according to an embodiment of this application;
FIG. 3 is a schematic diagram of image data obtained after row-block conversion according to an embodiment of this application;
FIG. 4 is a schematic flowchart of an image data processing method according to an embodiment of this application;
FIG. 5 is a schematic structural diagram of an image data processing apparatus according to an embodiment of this application;
FIG. 6 is a schematic structural diagram of an electronic device according to an embodiment of this application; and
FIG. 7 is a schematic diagram of a hardware structure of an electronic device according to an embodiment of this application.

**DESCRIPTION OF EMBODIMENTS**

The following describes the technical solutions in the embodiments of this application clearly with reference to the accompanying drawings in the embodiments of this application. Apparently, the described embodiments are some but not all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that data used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of connected objects, and the character "/" generally indicates that the associated objects have an "or" relationship.

Embodiments of this application can be applied to scenarios of video noise reduction, image noise reduction, video coding and decoding, image coding and decoding, video compression, and image compression.

At present, in the field of image processing, for better reference of neighboring pixels, it is often necessary to process image data by blocks, such as three-dimensional noise reduction algorithms, image coding and decoding, and image compression. Common CMOS image sensors output video data streams in a row scanning manner. Therefore, the processing process of an ISP (image signal processor) chip involves image transformation from rows to blocks and from blocks to rows.

In a conventional processing solution, during row-block conversion, in order to ensure that a real-time video data stream is not overwritten, a ping-pong buffering manner is used. Specifically, two storage spaces are used. Taking row-to-block (M×N) as an example, a to-be-converted data stream that is input by M rows is first stored in a first storage space, and then data is read from the first storage space by blocks of size M×N. At the same time, subsequent continuously input M rows of data are synchronously stored row by row into a second storage space. The above steps are repeated, with block reading and row writing being alternately performed in the two storage spaces. This manner can ensure that the data stream is not overwritten, and the operation is relatively simple, but two storage spaces need to be consumed, resulting in waste of storage space.

In the image data processing method according to the embodiments of this application, an image processing apparatus can generate a required read address, and in a case that image data is read from a storage space according to the read address, quickly writes new image data at a storage position corresponding to the image data that has been read, thereby realizing alternating reading and writing of image data in one storage space without needing two storage spaces to realize row-to-block data conversion. This enables efficient row writing and block reading of image data, implements row-block conversion of image data streams, and reduces costs.

In addition, in the related art, in order to save storage space, a simple shift operation is performed on an initial read/write address to obtain a required operation address, further obtaining periodic changes of a write address and a read address, thereby implementing row-to-block conversion using only one storage space.

However, the related art has the following defects:

First, in order to write data and read data at the same time, a dual-port SRAM is used to store pixel values, and a depth of an instantiated SRAM needs to be 2^n. For example, storing a 1920×1080 image with 8×8 blocks requires an SRAM with a depth of 8×2048, resulting in relatively large power consumption and area of a chip.

Second, a size specification of a data block is limited. For example, for a data block of size M×N, M needs to be equal to 2^i, where i is a positive integer. This limits its application range.

Third, only conversion from data rows to blocks is involved. How to realize conversion from data blocks to data rows through one storage space is still a problem to be resolved.

In order to resolve the above problems, in the image data processing method according to embodiments of this application, in one aspect, through the method of single-cycle multi-pixel writing and interleaved reading and writing, a single-port SRAM is used to replace a dual-port SRAM. Additionally, a depth of the SRAM is configured according to actual image width, without wasting SRAM space due to alignment with a 2^n depth, thereby effectively reducing the power consumption and area of a chip. In another aspect, conversion of blocks of any M×N size (generally M and N are even numbers) is supported without a constraint of M having to be 2^i. In still another aspect, fast conversion from data rows to data blocks and fast conversion from data blocks to data rows can be supported, thereby greatly improving flexibility of conversion between row data and block data.

The following describes the image processing method according to the embodiments of this application in detail below through specific embodiments and application scenarios thereof with reference to the accompanying drawings.

The image data processing method according to the embodiments of this application may be executed by an electronic device, or may be executed by at least one of a functional module and a functional entity in the electronic device that are capable of implementing the image data processing method, which can be specifically determined according to actual usage requirements. No limitations are imposed in the embodiments of this application.

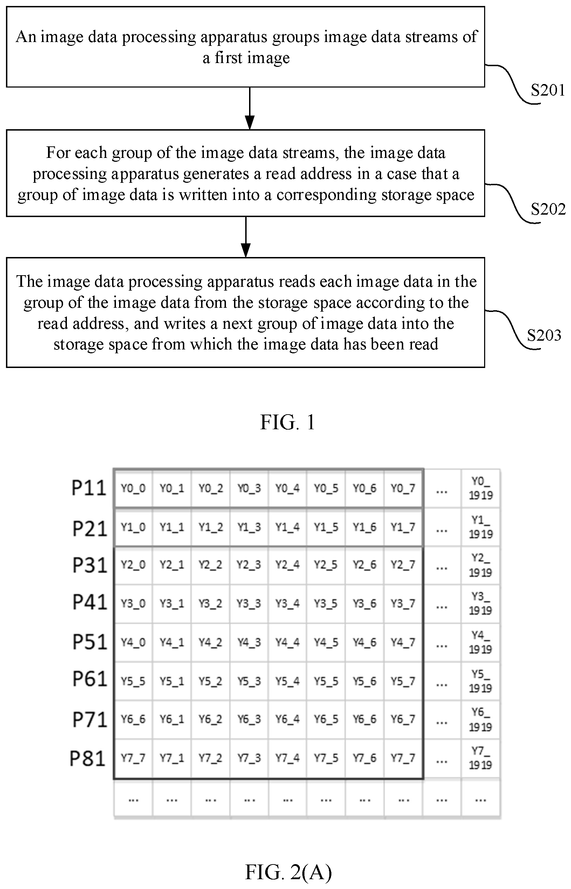

FIG. 1 is an image data processing method according to an embodiment of this application. As shown in FIG. 1, the image data processing method may include the following steps S201 to S203:

Step S201: An image data processing apparatus groups image data streams of a first image.

Each group of the image data streams includes M rows of image data, or each group of the image data streams includes at least one image data block; and M is a positive integer.

Optionally, in an embodiment of this application, the first image may be an image or a video frame.

Further optionally, in a case that the first image is an image, the first image may be an image captured by a camera or a downloaded image.

Optionally, in a case that the first image is a video frame, the first image may be a video frame of an online video or a video frame of an offline video.

Optionally, in an embodiment of this application, the image data processing apparatus may perform row scanning on the first image in a row scanning manner to obtain at least one row of image data of the first image.

In some possible implementations, the image data processing apparatus may sequentially scan each row of pixels of the first image from left to right to obtain at least one row of image data, where one row of image data corresponds to one row of pixels.

It should be noted that for a specific implementation of performing row scanning on an image to obtain image data, reference may be made to the related art, and details are not described herein.

Optionally, in an embodiment of this application, an image resolution of the first image may be 480p, 960p, 1080p, or the like, which is not limited in the embodiments of this application.

For example, in a case that the resolution of the first image is 1080p, the first image includes 1920×1080 pixels, where the number of pixels in a horizontal direction is 1920, and the number of pixels in a vertical direction is 1080.

Optionally, in an embodiment of this application, after obtaining at least one row of image data of the first image, the image data processing apparatus may generate an image data stream of the first image according to an acquisition order of the image data.

It should be noted that a data stream, also known as streaming data, refers to a collection of continuous data, and an image data stream refers to a sequence of image data with a sequential order.

Optionally, in an embodiment of this application, after performing row scanning on the first image to obtain at least one row of image data of the first image, the image data processing apparatus may group the at least one row of image data based on a preset number of rows of image data included in each image data block.

For example, the image data processing apparatus may group an acquired image data stream into groups of M rows each, to obtain at least one group of image data.

For example, the number of rows of image data included in each image data block may be 4 rows, 8 rows, 12 rows, or the like, which may be specifically set according to actual requirements. No limitations are imposed in the embodiments of this application.

For example, taking M being 8 as an example, the number of pixels of image 1 in a vertical direction is 480, that is, image 1 includes 480 rows of pixels. After row scanning is performed on image 1, 480 rows of image data can be obtained. The image data processing apparatus groups image data streams corresponding to the 480 rows of image data into groups of 8 rows each, and 60 groups of image data can be obtained.

Optionally, in an embodiment of this application, the image data may include pixel values of an image. For example, one piece of image data may be a pixel value of one pixel of an image.

In some other possible implementations, the image data processing apparatus may perform block scanning on an image area of the first image to obtain at least one image data block.

Optionally, in an embodiment of this application, the image data block may be a 4×4 image data block, an 8×8 image data block, or the like, which is not limited in the embodiments of this application.

Optionally, in an embodiment of this application, the number of image data blocks included in each group of image data streams is the number of data blocks in a row direction of the first image.

For example, assuming that the first image includes 80 rows of pixels, with each row having 240 pixels, after the first image is scanned in 8×8 blocks, 300 image data blocks are obtained, where the row direction of the first image includes 30 image data blocks, meaning that one row of image data corresponds to 30 image data blocks.

Step S202: For each group of the image data streams, the image data processing apparatus generates a read address in a case that a group of the image data is written into a corresponding storage space.

The read address is used to indicate an address in the storage space of each image data that needs to be read by blocks in the group of the image data.

Optionally, in an embodiment of this application, the group of image data may be any group of image data in the at least one group of image data.

Optionally, in an embodiment of this application, the storage space is a storage space of a single-port random access memory SPRAM, a storage space of a dual-port random access memory, or a storage space of another memory.

It should be noted that a single-port random access memory is a single-port RAM (Single-Port RAM, SPRAM); and a dual-port random access memory is a true dual-port RAM (True Dual-Port RAM).

It should be noted that a single-port RAM has only one set of data lines and one set of address lines for input, has only one clock, shares the same address lines for read and write operations, and has only one port for output, so read and write operations of a single-port RAM cannot be performed simultaneously. A dual-port RAM has two sets of address lines and two sets of data lines for input, two clocks, and two separate data lines for output, so the two ports of a dual-port RAM each have read and write ports, supporting read and write operations without interference, with the two ports operating independent of each other. Compared with a dual-port RAM, a single-port RAM typically cannot alternately perform data read and write operations simultaneously, but has lower power consumption than a single-port RAM.

Optionally, in an embodiment of this application, a size of the storage space may be determined based on the number of image data blocks corresponding to each row of image data and the number of data rows of each image data block.

It can be understood that the number of image data blocks corresponding to each row of image data is the number of image data blocks in a row direction of an image.

For example, taking one row of image data including 240 pixel values as an example, if 8×8 data blocks need to be output, each row of pixel values corresponds to 30 data blocks, and each data block includes 8 rows of pixel values.

Optionally, in an embodiment of this application, based on a change rule of an address in the storage space of each image data that needs to be read by rows, the image data processing apparatus may determine an address in the storage space of each image data that needs to be read by blocks, that is, the read address.

Optionally, in an embodiment of this application, the image data processing apparatus may write the input M rows of image data into the storage space in order, with addresses for storing the image data incremented consecutively.

Optionally, in an embodiment of this application, the image data processing apparatus may sequentially write each group of the image data streams into the storage space.

For example, assuming that image data includes 60 groups of image data, the 60 groups of data may be cyclically written into the storage space.

Step S203: The image data processing apparatus reads each image data in the group of the image data from the storage space according to the read address, and writes a next group of image data into the storage space from which the image data has been read.

Optionally, in an embodiment of this application, the image data processing apparatus may generate a read address according to the address in the storage space of image data that needs to be read by blocks, read each image data by blocks according to the read address, and write image data in a next group of image data into a storage position in the storage space from which the image data has been read.

Optionally, in an embodiment of this application, the image data processing apparatus may read a data stream by blocks after writing of an M-th row of image data in each group of the image data streams is completed; or the image data processing apparatus may read a data stream by rows after writing of all groups of the image data streams is completed.

Optionally, in an embodiment of this application, the image data processing apparatus may write and read multiple groups of image data in the image data stream through multiple cycles.

For example, in a first cycle, the image data processing apparatus writes a first group of image data into a storage space of the SPRAM in order. In a second cycle, the image data processing apparatus reads the first group of image data written in the first cycle by data blocks of size M×N, and writes a second group of image data into the SPRAM storage space from which the image data has been read by blocks. In a third cycle, the image data processing apparatus reads the image data written in the second cycle by blocks of size M×N, and writes a third group of image data into the SPRAM storage space from which the image data has been read by blocks. Such process repeats until a last group of image data is read by blocks.

M is the number of rows of image data included in one image data block of the first image, N is the number of data in one row of data in one image data block, and N is a positive integer.

For example, M×N may be 8×8, 8×4, 4×8, 16×16, or the like.

Optionally, in an embodiment of this application, in a case that one image data block in a group of image data has been read, the image data processing apparatus may store a next group of image data into a storage space from which the image data block has been read; or in a case that one piece of image data in one image data block in a group of image data has been read, the image data processing apparatus may store one piece of image data in a next group of image data in a storage space from which the image data has been read.

For each group of the image data streams obtained after grouping, the above steps S202 and S203 and related solutions thereof may be executed to write into the storage space.

In the image data processing method according to the embodiments of this application, an image processing apparatus groups image data streams of a first image, where each group of the image data streams includes M rows of image data, or each group of the image data streams includes at least one image data block; and M is a positive integer; for each group of the image data streams, generates a read address in a case that a group of the image data is written into a corresponding storage space, where the read address is used to indicate an address in the storage space of each image data that needs to be read by blocks in the group of the image data; and reads each image data in the group of the image data from the storage space according to the read address, and writes each image data in a next group of image data into the storage space from which the image data has been read. Through this method, the image processing apparatus can generate a required read address, and in a case that image data is read from the storage space according to the read address, quickly write new image data at a storage position corresponding to the image data that has been read, thereby realizing alternate reading and writing of image data in one storage space. This enables efficient row writing and block reading of image data, implements row-block conversion of image data streams, and saves storage space.

Optionally, in an embodiment of this application, each group of the image data streams includes M rows of image data; and the process of generating a read address by the image data processing apparatus in step S202 may include the following steps S202a and S202b.

Step S202a: The image data processing apparatus calculates an address in the storage space of to-be-read target image data in the group of image data based on the number of image data blocks in a row direction of the first image.

Step S202b: The image data processing apparatus generates a read address corresponding to the target image data according to the address in the storage space of the target image data.

Optionally, in an embodiment of this application, the image data block in the row direction of the first image is determined based on the number of pixels in one row of the first image and a size of the image data block.

Optionally, in an embodiment of this application, one piece of target image data includes N pieces of image data.

Optionally, in an embodiment of this application, the target image data is image data in an image data block that needs to be output.

For example, taking an 8×8 image data block to be output as an example, one 8×8 image data block includes 8 pieces of target image data, with one piece of target image data including 8 pixel values.

For example, it is assumed that the first image includes 100 rows of pixels and the number of pixels per row is 240. Taking an image data block with a size of $8\times8$ as an example, the number of image data blocks in the row direction of the first image is 30, that is, 240/8.

For example, with reference to the foregoing embodiments, assuming that one group of image data includes 8 rows of image data and each row of image data includes 240 pixel values, after one group of image data is written into a RAM storage space with a size of $30\times8$, a first row of storage units of the RAM storage space store 30 data blocks corresponding to a first row of pixel values, and an address range of the first row of storage units is 0-29; a second row of storage units of the RAM storage space store 30 data blocks corresponding to a second row of pixel values, and an address range of the second row of storage units is 30-59; ...; an eighth row of storage units of the RAM storage space store 30 data blocks corresponding to an eighth row of pixel values, and an address range of the eighth row of storage units is 210-239. According to addresses of the data blocks in the storage space, an address of a first target pixel value corresponding to a first data block to be read in the group of pixel values can be determined as 0, an address of a second target pixel value is 30, an address of a third target pixel value is 60, and so on.

It should be noted that a RAM with a size of $30\times8$ means that a storage space of the RAM includes 8 rows of storage units, one row of storage units includes 30 storage units, and each storage unit can store 8 pixel values, where 8 pixel values are one row of data of one data block. A storage address range corresponding to storage units of the RAM storage space is 0-239.

Optionally, in an embodiment of this application, the image data processing apparatus uses the address in the storage space of the target image data as the read address corresponding to the target image data.

For example, with reference to the foregoing embodiments, an address of a first target pixel value corresponding to a first data block to be read in one group of pixel values is 0, then a read address corresponding to the first target pixel value of the first data block is 0, that is, the image processing apparatus can read the first target pixel value from a storage unit with an address of 0.

Optionally, in an embodiment of this application, the step S202a may be implemented through the following step S202a1.

Step S202a1: The image data processing apparatus calculates, using a first formula, an address in the storage space of to-be-read (i+1)-th target image data in the group of the image data based on the number of image data blocks in the row direction of the image and the number of rows of image data corresponding to each image data block; where $i\in[0, \text{tile\_num}\times M-1]$, and i is an integer; and

the first formula is: $An(i)=(i\times \text{tile\_num}^{n-1})\%(\text{tile\_num}\times M-1)+1$, tile_num is the number of image data blocks in the row direction of the image, and n is equal to a group number of the image data minus 1.

For example, it is assumed that tile_num is equal to 30 and M is equal to 8. In a case that the first formula is used to calculate an address in the storage space of first target image data in a first group of image data, tile_num equal to 30, M equal to 8, i equal to 0, and n equal to 0 (that is, 1-1) are substituted into the first formula to obtain An(0) equal to 0, that is, the address in the storage space of the first target image data in the first group of image data is 0.

The following explains the process of determining a read address in the embodiments of this application through specific embodiments.

For example, converting multiple rows of image data obtained by row scanning a 1080P image into $8\times8$ blocks is used as an example. As shown in FIG. 2(A), after row scanning on the image, 1080 rows of pixel values are obtained, with each row containing 1920 pixel values. Every 8 rows of pixel values are grouped into one group. A first pixel value of a first row is represented by Y0_0, a second pixel value of the first row is represented by Y0_1, ..., a 1920-th pixel value of the first row is represented by Y0_1919. Similarly, a first pixel value of a second row is represented by Y1_0, a second pixel value of the second row is represented by Y1_1, ..., a 1920-th pixel value of the second row is represented by Y1_1919. Pixel values in a solid line frame indicate all image data that need to be included in a first image data block obtained by converting a first group of image data. P11, P21, ..., P81 each represent one row of pixel values in the image data block, and the one row of pixel values can be regarded as one pixel value set, that is, the target image data.

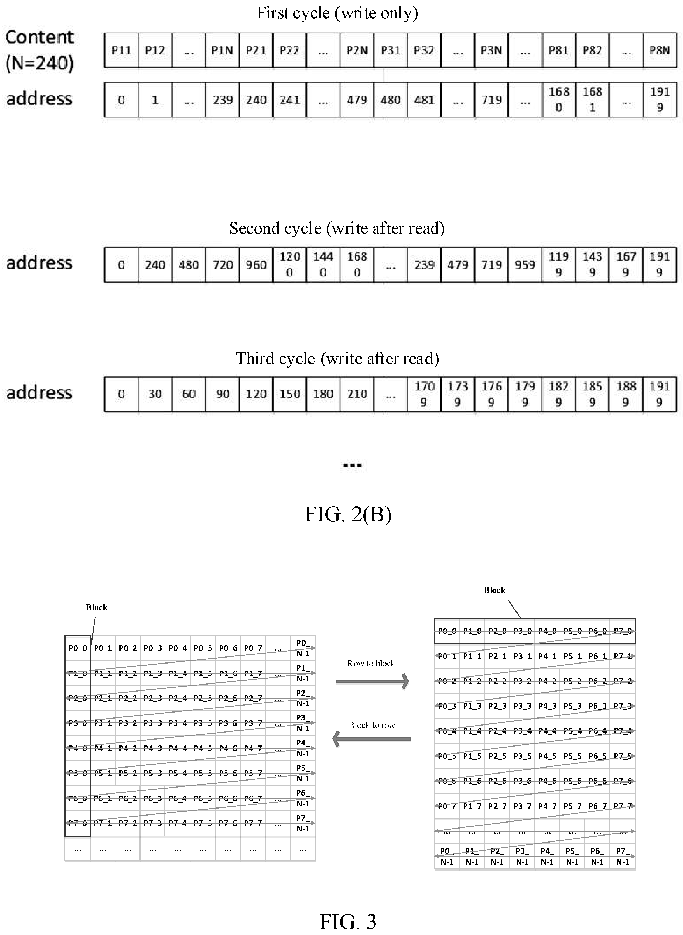

With reference to FIG. 2(A), in the first cycle, the image data processing apparatus writes pixel values of the image into the SPRAM, with one address storing 8 pixel values. As shown in FIG. 2(B), Content (N=240) indicates that there are correspondingly 240 image data blocks in a row direction. In the first cycle, the image processing apparatus stores a first group of image data into a corresponding address space. In FIG. 2(B), P11 represents a first row of image data of a first image data block corresponding to a first group of pixel values, P12 represents a first row of image data of a second image data block corresponding to the first group of pixel values, ..., P1N represents a first row of image data of an N-th image data block corresponding to the first group of pixel values; P21 represents a second row of image data of the first image data block corresponding to the first group of pixel values, P22 represents a second row of image data of a second image data block corresponding to a second row of pixel values, ..., P2N represents a second row of image data of the N-th image data block corresponding to the first group of pixel values; and similarly, P81 represents an eighth row of image data of the first image data block corresponding to the first group of pixel values, P82 represents an eighth row of image data of the second image data block corresponding to the first group of pixel values, ..., P8N represents an eighth row of image data of the N-th image data block corresponding to the first group of pixel values; and an address of P11 is 0, an address of P12 is 1, ..., an address of P8N is 1919. After the one group of pixel values are written into the SPRAM, a second cycle starts. The image data processing apparatus calculates, according to the first formula, addresses of target pixel values that need to be read for the image data blocks corresponding to the one group of pixel values, then reads the target image data by blocks according to the addresses, and writes a second group of pixel values into the SPRAM storage space from which the image data has been read by blocks. As shown in FIG. 2(B), the addresses of the target pixel values that have been read by blocks are 0, 240, 480, ..., and 1919, respectively. In a third cycle, the image data processing apparatus calculates, according to the first formula, addresses of target pixel values that need to be read for the image data blocks corresponding to a previous group of pixel values, then reads the target image data by blocks according to the addresses, and writes a third group of pixel values into the SPRAM storage space from which the image data has been read by blocks. As shown in FIG. 2(B), the addresses of the target pixel values that have been read by blocks are 0, 30, 60, ..., 1919, respectively. Such process repeats until 135 groups of pixel values of the image are all converted into block pixels for output.

With reference to FIG. 2(A) and FIG. 2(B), FIG. 3 is a schematic diagram of image data obtained through row-block conversion according to an embodiment of this application. As shown in FIG. 3, the left figure is a schematic diagram of storing pixel values obtained by row scanning into a storage space by rows, each column of pixel values in the left figure constitutes one image data block, and one pixel value in each column of pixel values includes pixel values of 8 pixels, that is, 8 pixel values are stored in one storage unit. As shown in FIG. 3, P0_0 represents 1st to 8th pixel values, and N represents the number of data blocks in a row direction. The right figure in FIG. 3 shows an arrangement of data blocks when pixel values written by rows are converted into the data blocks. As shown in FIG. 3, a first row of pixel values constitutes one data block.

The following explains a derivation process of the first formula in detail.

For example, first, "tile_num" is defined as the number of blocks in a row direction of an image, that is, tile_num is equal to a width of the image divided by N, namely img_width/N. "tile_height" is the number of rows related to an image block, which is also equal to M, indicating that one block includes M rows. A read-write cycle of every M rows of image pixels is one cycle, and a write operation has a higher priority than a read operation. For an input image data stream of k ppc (pixel per cycle) by row scanning, pixels are first merged at 2k ppc. The purpose of this operation is to implement interleaved read and write of data into the SPRAM. A width of the SPRAM is a pixel bit width multiplied by 2k, that is, pixel_width×2k, and a depth of the SPRAM is an image width multiplied by M divided by 2k, that is, img_width×M/2k.

In a first cycle, for the input M rows of an image data stream, the merged 2k pixels are sequentially written into the SPRAM, with the addresses incremented consecutively. After writing of the M rows of the image data stream is all completed, a data stream can be read by a block of size M×N. In order to reduce data reading delay time, reading of data of a first block of size M×N can be started when an M-th row of data is full of one block. For convenience of description, it is assumed herein that N=2k. Generally, N is an integer multiple of 2k.

In a second cycle, the data written in the first cycle is read by a block of size M×N in the second cycle, and new M rows of an image or video stream are to be written into the SPRAM storage space from which the data has been read by blocks. An address jump rule for reading a first data block is:

0,

$$\text{tile\_num},$$

$$2\times\text{tile\_num},$$

$$3\times\text{tile\_num},$$

...,

$$(M-1)\times\text{tile\_num};$$

An address jump rule for reading a second data block is:

1,

$$1+\text{tile\_num},$$

$$1+2\times\text{tile\_num},$$

$$1+3\times tile\_num,$$

...,

$$1+(M-1)\times tile\_num;$$

Similarly, an address jump rule for a last data block can be obtained as follows:

$$tile\_num-1,$$

$$tile\_num-1+tile\_num,$$

$$tile\_num-1+2\times tile\_num,$$

$$tile\_num-1+3\times tile\_num,$$

...,

$$tile\_num-1+(M-1)\times tile\_num;$$

It should be noted that since in the second cycle, the new M rows of the image data stream need to be written into a space from which the data has been read by blocks, a write address rule for the new M rows of the image data stream in the second cycle follows the read address rule for a block of size M×N in the previous cycle.

In a third cycle, the video data stream written in the second cycle is read by a block of size M×N, and new M rows of an image or video stream are to be written into the SPRAM storage space from which the data has been read by blocks. An address jump rule for reading a first data block is:

0,

$$(tile\_num^2-1)\%(tile\_num\times M-1)+1,$$

$$(2\times tile\_num^2-1)\%(tile\_num\times M-1)+1,$$

$$(3\times tile\_num^2-1)\%(tile\_num\times M-1)+1,$$

...,

$$((M-1)\times tile\_num^2-1)\%(tile\_num\times M-1)+1,$$

An address jump rule for reading a second block is:

1,

$$1+(tile\_num^2-1)\%(tile\_num\times M-1)+1,$$

$$1+(2\times tile\_num^2-1)\%(tile\_num\times M-1)+1,$$

$$1+(3\times tile\_num^2-1)\%(tile\_num\times M-1)+1,$$

...,

$$1+((M-1)\times tile\_num^2-1)\%(tile\_num\times M-1)+1,$$

Similarly, an address jump rule for a last block can be obtained as follows:

$$tile\_num-1,$$

$$tile\_num-1+(tile\_num^2-1)\%(tile\_num\times M-1)+1,$$

$$tile\_num-1+(2\times tile\_num^2-1)\%(tile\_num\times M-1)+1,$$

$$tile\_num-1+(3\times tile\_num^2-1)\%(tile\_num\times M-1)+1,$$

...,

$$tile\_num-1+((M-1)\times tile\_num^2-1)\%(tile\_num\times M-1)+1,$$

In summary, a general rule can be obtained as follows:
For a first cycle:

$$A0(i)=i, \ i\in[0,tile\_num\times M-1],$$

where "A0" represents a write address at the first cycle, and i represents an (i+1)-th 2k pixel of an input image data stream.
For a second cycle:

$$A1(i)=(i\times tile\_num-1)\%(tile\_num\times M-1)+1,$$

For a third cycle:

$$A2(i)=(i\times tile\_num^2-1)\%(tile\_num\times M-1)+1,$$

...,
**[0104]** For an (n+1)-th cycle:

$$An(i)=(i\times tile\_num^n-1)\%(tile\_num\times M-1)+1,$$

Optionally, in the above formula, tile_num×M is a size of an address space of the SPRAM, and for tile_num^n, during hardware implementation, the image data processing apparatus may first save a value of tile_num^(n-1) of a previous cycle, and multiply it by tile_num when used in a current cycle, thereby improving computational efficiency.
Based on the above calculation results, a general rule can be obtained as follows:
For a first cycle:

$$A0(i)=i, \ i\in[0,tile\_num\times M-1],$$

where "A" represents a write address at the first cycle, and i represents an i-th 2k pixel of an input image data stream.
For a second cycle:

$$A1(i)=(i\times tile\_num-1)\%(tile\_num\times M-1)+1,$$

For a third cycle:

$$A2(i)=(i\times tile\_num^2-1)\%(tile\_num\times M-1)+1,$$

...,

For an (n+1)-th cycle:

$$An(i)=(i\times tile\_num^{\wedge}n-1)\%(tile\_num\times M-1)+1,$$

It should be noted that in the above formula, tile_num×M is a size of an address space of the SPRAM.

Optionally, in an embodiment of this application, in a hardware implementation process, the image data processing apparatus may first save a value of tile_num^(n-1) of a previous cycle, and multiply it by tile_num when used in a current cycle, thereby improving computational efficiency of data.

In the image data processing method according to the embodiments of this application, the image data processing apparatus may calculate, using the first formula, an address in the storage space of each to-be-read target image data in a group of image data based on the number of image data blocks in the row direction of the image and the number of rows of image data corresponding to each image data block, thereby efficiently and accurately reading each image data by blocks according to the address of each target image data to be read.

Optionally, in an embodiment of this application, the process of reading each image data in the group of the image data from the storage space according to the read address, and writing each image data in a next group of image data of the image data into the storage space from which the image data has been read in step S203 may be implemented through the following step S203a.

Step S203a: The image data processing apparatus reads the (i+1)-th target image data from the storage space according to a read address corresponding to the (i+1)-th target image data, and writes j-th image data in a next group of image data into the storage space from which the (i+1)-th target image data has been read.

$$j\in[1,\ tile\_num\times M].$$

In an embodiment of this application, after fetching a piece of target image data, the image data processing apparatus may write a piece of new image data into a storage space from which the target image data has been fetched.

For example, with reference to the foregoing embodiments, the image data processing apparatus first fetches a first target pixel value corresponding to a first data block in a first group of pixel values from a storage unit corresponding to one storage address, and after the target pixel value is fetched from a storage space corresponding to its storage address, writes a first pixel value in a second group of pixel values into this storage space. Then the image data processing apparatus continues to fetch a second target pixel value corresponding to the first data block in the first group of pixel values from a storage space corresponding to its storage address, and after the second target pixel value is fetched, writes a second pixel value in the second group of pixel values into this storage space. This process repeats until all pixel values written by rows are read by blocks.

It should be noted that after a last group of pixel values is written into the storage space, only reading the last group of pixel values by blocks is required, with no need to write pixel values again.

In an embodiment of this application, every time the image data processing apparatus reads one piece of image data from the storage space, it writes one piece of new image data into the storage space from which the image data has been read. Through alternate reading and writing, efficiency of row-to-block processing of image data is greatly improved.

Optionally, in an embodiment of this application, each group of the image data streams includes at least one image data block. For example, the process of generating a read address in step S202 may include the following steps S202c and S202d.

Step S202c: The image data processing apparatus calculates an address in the storage space of to-be-read target image data in a group of image data based on the number of image data blocks in a row direction of the first image and the number of rows of image data corresponding to one image data block.

Step S202d: The image data processing apparatus generates a read address corresponding to the target image data according to the address in the storage space of the target image data.

Optionally, in an embodiment of this application, the image data processing apparatus may use the address in the storage space of the target image data as the read address corresponding to the target image data.

For example, with reference to the foregoing embodiments, taking the number of image data blocks in the row direction of the first image being 30, one row of image data including 240 pieces of image data, and the number of rows of image data corresponding to one image data block being 8 rows as an example, an address of first image data of a first row of image data that needs to be read is 0, an address of second image data of the first row of image data that needs to be read is 8, an address of third image data of the first row of image data that needs to be read by rows is 16, ..., and an address of last image data of the first row of image data that needs to be read by rows is 232, that is, 29×8.

It should be noted that according to the row-to-block transformation in the foregoing embodiments, block-to-row transformation can be regarded as an inverse process of row-to-block transformation. In order to realize block-to-row transformation, definitions of 'tile_num' and 'tile_height' described above can be swapped, because from the perspective of pixel processing, a row-based image matrix and a block-based image matrix are transpose matrices.

In the image data processing method according to the embodiments of this application, the image processing apparatus groups received image data streams to obtain L groups of image data, and in a case that an h-th group of image data is written into a storage space, generates a read address according to a second address jump rule, where $0 \leq h \leq L-1$; then, reads the h-th group of image data from the storage space according to the read address, and writes an (h+1)-th group of image data into a storage space corresponding to the image data that has been read.

In an embodiment of this application, the image processing apparatus can obtain a read address corresponding to image data that needs to be read by rows, and in a case that the image data is read from a storage space according to the read address, quickly write new image data at a storage position corresponding to the image data that has been read, thereby realizing alternate reading and writing of image data in one storage space. This enables efficient block writing and row reading of image data, implements row-block conversion of image data streams, and saves storage space.

Optionally, in an embodiment of this application, the step S202c may be implemented through the following step S202c1.

Step S202c1: The image processing apparatus calculates, using a second formula, an address in the storage space of to-be-read i-th target image data in the group of the image data based on the number of image data blocks in the row direction of the image and the number of rows of image data corresponding to one image data block.

$$i \in [0, \text{tile\_height} \times \text{tile\_num}-1],$$

and i is a positive integer.

The second formula is: $An(i)=(i \times \text{tile\_height}^{n-1}) \% (\text{tile\_height} \times \text{tile\_num}-1)+1$; tile_num is the number of image data blocks in the row direction of the first image, and tile_height is the number of rows of image data included in one image data block.

For example, taking tile_height equal to 8 as an example, in a case that the second formula is used to calculate an address in the storage space of first target image data in a first group of image data, tile_height equal to 8, i equal to 0, and n equal to 0 (that is, 1-1) are substituted into the first formula to obtain An(0) equal to 0, that is, the address in the storage space of the first target image data in the first group of image data is 0.

The following explains a derivation process of the second formula in detail.

Following the parameter definitions for the row-to-block conversion described above, the following are write/read address change rules of the first two cycles of block-to-row conversion and a deduced cycle address change rule.

In a first cycle, for an input image data stream of blocks of size M×N, the M pieces of N-pixel block data are sequentially written into the SPRAM, with the addresses incremented consecutively.

In a second cycle, the block data stream written in the first cycle is read by rows in the second cycle, and new M rows of an image or video stream of blocks of size M×N are to be written into the SPRAM storage space from which the data has been read by rows. An address jump rule for reading a first row is:

0,
tile_height,

$$2 \times \text{tile\_height},$$

$$3 \times \text{tile\_height},$$

...,

$$(\text{tile\_num}-1) \times \text{tile\_height};$$

An address jump rule for reading a second row is:
1,

$$1+\text{tile\_height},$$

$$1+2 \times \text{tile\_height},$$

$$1+3\times tile\_height,$$

...,

$$1+(tile\_num-1)\times tile\_height;$$

An address jump rule for a last row can be obtained as follows:

$$tile\_height-1,$$

$$tile\_height-1+tile\_height,$$

$$tile\_height-1+2\times tile\_height,$$

$$tile\_height-1+3\times tile\_height,$$

...,

$$tile\_height-1+(tile\_num-1)\times tile\_height;$$

It should be noted that since in the second cycle, the new M rows of an image data stream of blocks of size M×N need to be written into a space from which the data has been read by rows, a write address rule for the new M rows of the image data stream of blocks of size M×N in the second cycle follows the read address rule for the M rows in the previous cycle.

According to the above read address and write address change rules, a general rule can be obtained as follows: For a first cycle:

$$A0(i)=i, i\in[0,tile\_height\times tile\_num-1],$$

where "A0" represents a first cycle write address, and i represents an i-th pixel of an input image block data stream.

For a second cycle:

$$A1(i)=(i\times tile\_height-1)\%(tile\_height\times tile\_num-1)+1,$$

For a third cycle:

$$A2(i)=(i\times tile\_height^\wedge2-1)\%(tile\_height\times tile\_num-1)+1,$$

...,

For an (n+1)-th cycle:

$$An(i)=(i\times tile\_height^\wedge n-1)\%(tile\_height\times tile\_num-1)+1,$$

Optionally, in an embodiment of this application, the process of writing a group of the image data into a corresponding storage space in the step S202 may be implemented through the following step A1.

Step A1: The image data processing apparatus merges two adjacent pieces of image data in the group of the image data, and writes each piece of merged image data into a storage space of an SPRAM through one clock cycle.

Optionally, in an embodiment of this application, the image data processing apparatus may alternately perform reading and writing of image data.

Optionally, in an embodiment of this application, in a case that the image data processing apparatus performs row scanning on the first image to obtain an input image data stream, it first merges two adjacent pieces of image data to obtain one piece of merged image data, and then transmits and writes the merged image data into the storage space within one clock cycle.

For example, the image data processing apparatus may perform pixel merging on two adjacent pieces of pixel data in an image data stream to obtain merged pixel data.

It should be noted that for a specific process of pixel merging, reference may be made to the related art, and details are not described in the embodiments of this application.

Optionally, in an embodiment of this application, the image data processing apparatus may write image data within one clock cycle, and read the image data within a next clock cycle of the clock cycle; or the image data processing apparatus may read image data within one clock cycle, and write image data within a next clock cycle of the clock cycle.

In one example, taking one group of image data including 500 pixel values as an example, assuming that the total number of clock cycles is 500, the image data processing apparatus performs pixel merging on adjacent pixel values of the 500 pixel values to obtain 250 pieces of merged pixel data, and writes the 250 pieces of pixel data into corresponding storage spaces respectively through 250 clock cycles, and then reads the 250 pieces of pixel data by blocks through the remaining 250 clock cycles, thereby alternately performing read and write operations on image data.

In another example, in a case that the image data processing apparatus has read written M rows of pixel data by blocks, it reads one piece of pixel data within one clock cycle, and writes one piece of new pixel data within a next cycle of the clock cycle, thereby alternately performing read and write operations on image data.

In an embodiment of this application, by merging data before transmission, actually two pieces of image data can be transmitted in one clock cycle, thereby freeing one clock cycle for writing new image data. This allows one single-port RAM to implement alternate reading and writing of image data, effectively reducing system power consumption through use of a single-port RAM while ensuring image data processing efficiency.

Optionally, in an embodiment of this application, after the image processing apparatus reads an h-th group of image data from a storage space according to a read address, it may split merged image data to obtain each independent image data.

For example, the image data processing apparatus may split merged pixel data to obtain pixel data corresponding to each pixel.

It should be noted that the pixel data may include pixel values.

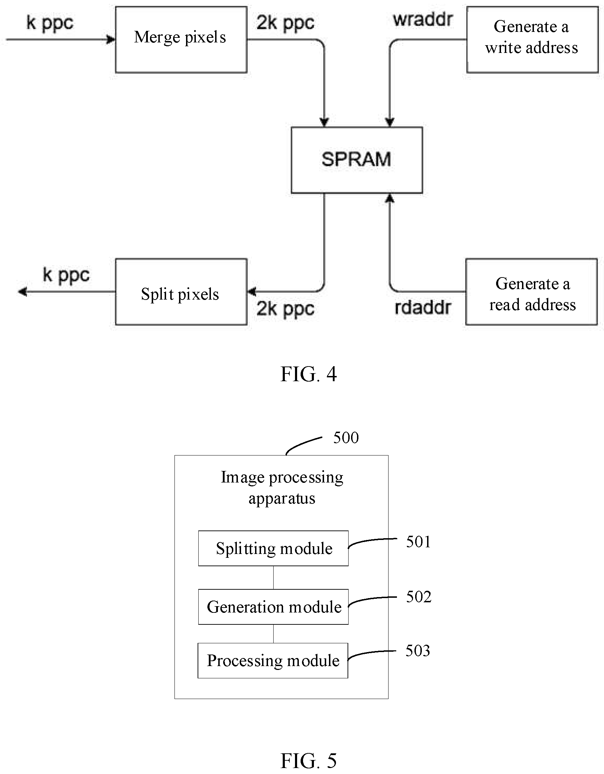

With reference to the foregoing embodiments, FIG. 4 is a schematic flowchart of an image data processing method according to an embodiment of this application. As shown in FIG. 4, for an input image data stream of k ppc (pixel per cycle) by row scanning, pixels are first merged at 2k ppc, so that the SPRAM alternately performs write and read operations on data. A width of the SPRAM is a pixel bit width multiplied by 2k, that is, pixel_width×2k, and a depth of the SPRAM is an image width multiplied by M divided by 2k, that is, img_width×M/2k. Then, a write address is generated, merged pixels are written into a storage space of the SPRAM according to the write address, a read address is generated according to the first address jump rule, written pixel values are read by blocks according to the read address, and the read pixel values are split to obtain pixel values corresponding to each pixel.

The image data processing method according to the embodiments of this application can support mutual conversion between image resolutions of any sizes and blocks of any M×N sizes. By finding change rules of read and write addresses through multiple cycles, a single-port SPRAM is used to store image row or image block data. Compared with a conventional row-block transformation solution, the image data processing method proposed in this application can reduce the chip area and power consumption. Furthermore, according to transposition characteristics of the image matrix during row-block conversion, ideas and implementations of block-to-row conversion are proposed, which also broadens the application range of the image data processing method of this application.

The image data processing method according to the embodiments of this application may be executed by an image data processing apparatus. In the embodiments of this application, an image data processing apparatus executing the image data processing method is used as an example to describe an image data processing apparatus according to an embodiment of this application.

FIG. 5 is a schematic structural diagram of an image data processing apparatus according to an embodiment of this application. As shown in FIG. 5, the image data processing apparatus includes a splitting module 501, a generation module 502, and a processing module 503. The splitting module 501 is configured to group image data streams of a first image, where each group of the image data includes M rows of image data, or each group of the image data includes at least one image data block; and M is a positive integer. The generation module 502 is configured to, for each group of the image data obtained after grouping by the splitting module, generate a read address in a case that the processing module writes a group of the image data into a corresponding storage space, where the read address is used to indicate an address in the storage space of each image data that needs to be read by blocks in the group of the image data. The processing module 503 is configured to read each image data in the group of the image data from the storage space according to the read address generated by the generation module, and write each image data in a next group of image data into the storage space from which the image data has been read.

Optionally, in an embodiment of this application, each group of the image data includes M rows of image data;

the generation module is specifically configured to calculate an address in the storage space of to-be-read target image data in the group of the image data based on the number of image data blocks in a row direction of the first image; and

the generation module is specifically configured to generate a read address corresponding to the target image data according to the address in the storage space of the target image data.

Optionally, in an embodiment of this application, the generation module is specifically configured to calculate, using a first formula, an address in the storage space of to-be-read (i+1)-th target image data in the group of the image data based on the number of image data blocks in the row direction of the first image and the number of rows of image data corresponding to each image data block; where $i \in [0, tile\_num \times M-1]$, and i is an integer; and

the first formula is: $An(i)=(i \times tile\_num^{n}-1)\%(tile\_num \times M-1)+1$, tile_num is the number of image data blocks in the row direction of the image, and n is equal to a group number of the image data minus 1.

Optionally, in an embodiment of this application, the processing module is specifically configured to read i-th target image data from the storage space according to a read address corresponding to the i-th target image data, and write j-th image data in a next group of image data into the storage space from which the i-th target image data has been read; where $j \in [1, tile\_num \times M]$.

Optionally, in an embodiment of this application, each group of the image data includes at least one image data block;

the generation module is specifically configured to calculate an address in the storage space of to-be-read target image data in a group of the image data based on the number of image data blocks in a row direction of the first image and the number of rows of image data corresponding to one image data block; and

the generation module is specifically configured to generate a read address corresponding to the target image data according to the address in the storage space of the target image data.

Optionally, in an embodiment of this application, the generation module is specifically configured to calculate, using a second formula, an address in the storage space of to-be-read i-th target image data in the group of the image data based on the number of image data blocks in the row direction of the image and the number of rows of image data corresponding to one image data block; where $i \in [0, tile\_height \times tile\_num-1]$, and i is a positive integer; and

the second formula is: $An(i)=(i \times tile\_height^{n}-1)\%(tile\_height \times tile\_num-1)+1$; tile_num is the number of image data blocks in the row direction of the first image, and tile_height is the number of rows of image data included in one image data block.

Optionally, in an embodiment of this application, the processing module is specifically configured to merge two adjacent pieces of image data in the group of the image data, and write each piece of merged image data into a storage space of an SPRAM through one clock cycle.

According to the image data processing apparatus in the embodiments of this application, the image processing apparatus groups image data streams of a first image, where each group of the image data streams includes M rows of image data, or each group of the image data streams includes at least one image data block; and M is a positive integer; for each group of the image data streams, generates a read address in a case that a group of the image data is written into a corresponding storage space, where the read address is used to indicate an address in the storage space of each image data that needs to be read by blocks in the group of the image data; and reads each image data in the group of the image data from the storage space according to the read address, and writes each image data in a next group of image data into the storage space from which the image data has been read. Through this method, the image processing apparatus can generate a required read address, and in a case that image data is read from the storage space according to the read address, quickly write new image data at a storage position corresponding to the image data that has been read, thereby realizing alternate reading and writing of image data in one storage space. This enables efficient row writing and block reading of image data, implements row-block conversion of image data streams, and saves storage space.

The image data processing apparatus in the embodiments of this application may be an electronic device, or may be a component in an electronic device, such as an integrated circuit or a chip. The electronic device may be a terminal or another device different from a terminal. For example, the electronic device may be a mobile phone, a tablet computer, a notebook computer, a palm computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (Network Attached Storage, NAS), a personal computer (personal computer, PC), a television (television, TV), a teller machine, a self-service machine, or the like, which is not specifically limited in the embodiments of this application.

The image data processing apparatus in the embodiments of this application may be an apparatus having an operating system. The operating system may be an Android (Android) operating system, an ios operating system, or other possible operating systems, which is not specifically limited in the embodiments of this application.

The image data processing apparatus according to the embodiments of this application can implement various processes implemented by the method embodiments in FIG. 1 to FIG. 4. To avoid repetition, details are not described herein again.

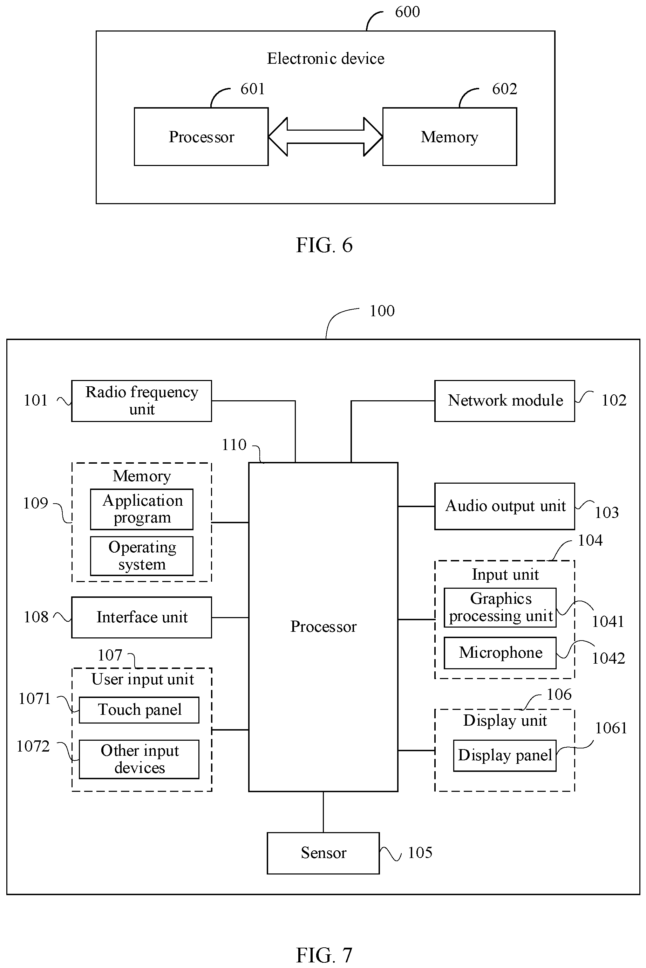

Optionally, as shown in FIG. 6, an embodiment of this application further provides an electronic device 600 including a processor 601 and a memory 602, where the memory 602 stores a program or instructions executable on the processor 601, and when the program or instructions are executed by the processor 601, the steps of the foregoing image data processing method embodiments are implemented, with the same technical effects achieved. To avoid repetition, details are not described herein again.

It should be noted that the electronic device in embodiments of this application includes the mobile electronic device and non-mobile electronic device.

FIG. 7 is a schematic diagram of a hardware structure of an electronic device for implementing embodiments of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (such as a battery) for supplying power to various components, and the power supply may be logically connected to the processor 110 through a power management system, to implement functions such as charging management, discharging management, and power consumption management through the power management system. The structure of the electronic device shown in FIG. 8 does not constitute a limitation on the electronic device, and the electronic device may include more or fewer components than shown in the figure, or combine some components, or have a different component arrangement, which are not described herein.

The processor 110 is configured to group image data streams of a first image, where each group of the image data includes M rows of image data, or each group of the image data includes at least one image data block; and M is a positive integer; the processor 110 is configured to, for each group of the image data obtained after grouping by the processor 110, generate a read address in a case that the processor 110 writes a group of the image data into a corresponding storage space, where the read address is used to indicate an address in the storage space of each image data that needs to be read by blocks in the group of the image data; and the processor 110 is configured to read each image data in the group of the image data from the storage space according to the read address generated by the processor 110, and write each image data in a next group of image data into the storage space from which the image data has been read.

Optionally, in an embodiment of this application, each group of the image data includes M rows of image data;

the processor 110 is specifically configured to calculate an address in the storage space of to-be-read target image data in the group of the image data based on the number of image data blocks in a row direction of the first image; and the processor 110 is specifically configured to generate a read address corresponding to the target image data according to the address in the storage space of the target image data.

Optionally, in an embodiment of this application, the processor 110 is specifically configured to calculate, using a first formula, an address in the storage space of to-be-read (i+1)-th target image data in the group of the image data based on the number of image data blocks in the row direction of the first image and the number of rows of image data corresponding to each image data block; where $i \in [0, \text{tile\_num} \times M-1]$, and i is an integer; and

the first formula is: $An(i)=(i \times \text{tile\_num}^n-1)\%(\text{tile\_num} \times M-1)+1$, tile_num is the number of image data blocks in the row direction of the image, and n is equal to a group number of the image data minus 1.

Optionally, in an embodiment of this application, the processor 110 is specifically configured to read i-th target image data from the storage space according to a read address corresponding to the i-th target image data, and write j-th image data in a next group of image data into the storage space from which the i-th target image data has been read; where $j \in [1, \text{tile\_num} \times M]$.

Optionally, in an embodiment of this application, each group of the image data includes at least one image data block;

the processor 110 is specifically configured to calculate an address in the storage space of to-be-read target image data in a group of the image data based on the number of image data blocks in a row direction of the first image and the number of rows of image data corresponding to one image data block; and the processor 110 is specifically configured to generate a read address corresponding to the target image data according to the address in the storage space of the target image data.

Optionally, in an embodiment of this application, the processor 110 is specifically configured to calculate, using a second formula, an address in the storage space of to-be-read i-th target image data in the group of the image data based on the number of image data blocks in the row direction of the image and the number of rows of image data corresponding to one image data block; where i∈[0, tile_height×tile_num-1], and i is a positive integer; and

the second formula is: An(i)=(i×tile_height^n-1)%(tile_height×tile_num-1)+1; tile_num is the number of image data blocks in the row direction of the first image, and tile_height is the number of rows of image data included in one image data block.

Optionally, in an embodiment of this application, the processor 110 is specifically configured to merge two adjacent pieces of image data in the group of the image data, and write each piece of merged image data into a storage space of an SPRAM through one clock cycle.

The electronic device according to the embodiments of this application groups image data streams of a first image, where each group of the image data streams includes M rows of image data, or each group of the image data streams includes at least one image data block; and M is a positive integer; for each group of the image data streams, generates a read address in a case that a group of the image data is written into a corresponding storage space, where the read address is used to indicate an address in the storage space of each image data that needs to be read by blocks in the group of the image data; and reads each image data in the group of the image data from the storage space according to the read address, and writes each image data in a next group of image data into the storage space from which the image data has been read. Through this method, the electronic device can generate a required read address, and in a case that image data is read from the storage space according to the read address, quickly write new image data at a storage position corresponding to the image data that has been read, thereby realizing alternate reading and writing of image data in one storage space. This enables efficient row writing and block reading of image data, implements row-block conversion of image data streams, and saves storage space.

It should be understood that, in the embodiments of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in the form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, function keys (such as a volume control key and a power on/off key), a trackball, a mouse, and a joystick. Details are not described herein.

The memory 109 may be configured to store software programs and various data. The memory 109 may mainly include a first storage area for storing programs or instructions and a second storage area for storing data. The first storage area may store an operating system, an application program or instructions required by at least one function (such as a sound play function or an image play function), and the like. In addition, the memory 109 may include a volatile memory or a non-volatile memory, or the memory x09 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus random access memory (Direct Rambus RAM, DRRAM). The memory 109 in the embodiment of this application includes but is not limited to these and any other suitable types of memory.

The processor 110 may include one or more processing units. Optionally, an application processor and a modem processor are integrated in the processor 110, where the application processor mainly processes operations related to an operating system, a user interface, an application program, and the like, and the modem processor, such as a baseband processor, mainly processes wireless communication signals. It can be understood that the modem processor may alternatively be not integrated in the processor 110.

An embodiment of this application further provides a readable storage medium, where the readable storage medium stores a program or instructions, and when the program or instructions are executed by a processor, various processes of the foregoing image data processing method embodiments are implemented, with the same technical effects achieved. To avoid repetition, details are not described herein again.

The processor is the processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions to implement various processes of the foregoing image data processing method embodiments, with the same technical effects achieved. To avoid repetition, details are not described herein again.

It should be understood that the chip mentioned in the embodiments of this application may also be referred to as a system-on-chip, a system chip, a system-on-a-chip, a system on a chip, or the like.

An embodiment of this application provides a computer program product, where the program product is stored in a storage medium, and the program product is executed by at least one processor to implement various processes of the foregoing image data processing method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An image data processing method, wherein the method comprises:

    grouping image data streams of a first image, wherein each group of the image data streams comprises M rows of image data, or each group of the image data streams comprises at least one image data block; and M is a positive integer;
    for each group of the image data, generating a read address in a case that a group of the image data is written into a corresponding storage space, wherein the read address is used to indicate an address in the storage space of each image data that needs to be read by blocks in the group of the image data; and
    reading each image data in the group of the image data from the storage space according to the read address, and writing each image data in a next group of image data into the storage space from which the image data has been read.

2. The method according to claim 1, wherein each group of the image data streams comprises M rows of image data; and the generating a read address comprises:

    calculating an address in the storage space of to-be-read target image data in the group of the image data based on the number of image data blocks in a row direction of the first image; and
    generating a read address corresponding to the target image data according to the address in the storage space of the target image data.

3. The method according to claim 2, wherein the calculating an address in the storage space of to-be-read target image data in the group of the image data based on the number of image data blocks in a row direction of an image comprises:

calculating, using a first formula, an address in the storage space of to-be-read (i+1)-th target image data in the group of the image data based on the number of image data blocks in the row direction of the image and the number of rows of image data corresponding to each image data block; wherein $i \in [0, tile\_num \times M-1]$, and i is an integer; and

the first formula is: $An(i)=(i \times tile\_num^{n}-1)\%(tile\_num \times M-1)+1$, tile_num is the number of image data blocks in the row direction of the image, and n is equal to a group number of the image data minus 1.

4. The method according to claim 3, wherein the reading each image data in the group of the image data from the storage space according to the read address, and writing each image data in a next group of image data of the image data into the storage space from which the image data has been read comprises:

reading the (i+1)-th target image data from the storage space according to a read address corresponding to the (i+1)-th target image data, and writing j-th image data in a next group of image data into the storage space from which the (i+1)-th target image data has been read; wherein $j \in [1, tile\_num \times M]$.

5. The method according to claim 1, wherein each group of the image data streams comprises at least one image data block; and the generating a read address comprises:

calculating an address in the storage space of to-be-read target image data in the group of the image data based on the number of image data blocks in a row direction of the first image and the number of rows of image data corresponding to one image data block; and

generating a read address corresponding to the target image data according to the address in the storage space of the target image data.

6. The method according to claim 5, wherein the calculating an address in the storage space of to-be-read target image data in the group of the image data based on the number of image data blocks in a row direction of an image and the number of rows of image data corresponding to one image data block comprises:

calculating, using a second formula, an address in the storage space of to-be-read i-th target image data in the group of the image data based on the number of image data blocks in the row direction of the image and the number of rows of image data corresponding to one image data block; wherein $i \in [0, tile\_height \times tile\_num-1]$, and i is a positive integer; and

the second formula is: $An(i)=(i \times tile\_height^{n}-1)\%(tile\_height \times tile\_num-1)+1$; tile_num is the number of image data blocks in the row direction of the first image, and tile_height is the number of rows of image data comprised in one image data block.

7. The method according to claim 1, wherein the writing a group of the image data into a corresponding storage space comprises:

merging two adjacent pieces of image data in the group of the image data, and writing each merged image data into a storage space of an SPRAM through one clock cycle.

8. An image data processing apparatus, wherein the apparatus comprises: a splitting module, a generation module, and a processing module, wherein:

the splitting module is configured to group image data streams of a first image, wherein each group of the image data streams comprises M rows of image data, or each group of the image data streams comprises at least one image data block; and M is a positive integer;

the generation module is configured to, for each group of the image data obtained after grouping by the splitting module, generate a read address in a case that the processing module writes a group of the image data into a corresponding storage space, wherein the read address is used to indicate an address in the storage space of each image data that needs to be read by blocks in the group of the image data; and

the processing module is configured to read each image data in the group of the image data from the storage space according to the read address generated by the generation module, and write each image data in a next group of image data into the storage space from which the image data has been read.

9. The apparatus according to claim 8, wherein each group of the image data comprises M rows of image data;

the generation module is specifically configured to calculate an address in the storage space of to-be-read target image data in the group of the image data based on the number of image data blocks in a row direction of the first image; and

the generation module is specifically configured to generate a read address corresponding to the target image data according to the address in the storage space of the target image data.

10. The apparatus according to claim 9, wherein

the generation module is specifically configured to calculate, using a first formula, an address in the storage space of to-be-read (i+1)-th target image data in the group of the image data based on the number of image data blocks in the row direction of the first image and the number of rows of image data corresponding to each image data block; wherein $i \in [0, \text{tile\_num} \times M-1]$, and i is an integer; and

the first formula is: $An(i)=(i \times \text{tile\_num}^{n}-1)\%(\text{tile\_num} \times M-1)+1$, tile_num is the number of image data blocks in the row direction of the image, and n is equal to a group number of the image data minus 1.

11. The apparatus according to claim 10, wherein
the processing module is specifically configured to read i-th target image data from the storage space according to a read address corresponding to the i-th target image data, and write j-th image data in a next group of image data into the storage space from which the i-th target image data has been read; wherein $j \in [1, \text{tile\_num} \times M]$.

12. The apparatus according to claim 8, wherein each group of the image data comprises at least one image data block;

the generation module is specifically configured to calculate an address in the storage space of to-be-read target image data in the group of the image data based on the number of image data blocks in a row direction of the first image and the number of rows of image data corresponding to one image data block; and

the generation module is specifically configured to generate a read address corresponding to the target image data according to the address in the storage space of the target image data.

13. The apparatus according to claim 12, wherein

the generation module is specifically configured to calculate, using a second formula, an address in the storage space of to-be-read i-th target image data in the group of the image data based on the number of image data blocks in a row direction of an image and the number of rows of image data corresponding to one image data block; wherein $i \in [0, \text{tile\_height} \times \text{tile\_num}-1]$, and i is a positive integer; and

the second formula is: $An(i)=(i \times \text{tile\_height}^{n}-1)\%(\text{tile\_height} \times \text{tile\_num}-1)+1$; tile_num is the number of image data blocks in the row direction of the first image, and tile_height is the number of rows of image data comprised in one image data block.

14. The apparatus according to claim 8, wherein
the processing module is specifically configured to merge two adjacent pieces of image data in a group of the image data, and write each merged image data into a storage space of a SPRAM through one clock cycle.

15. An electronic device, comprising a processor and a memory, wherein the memory stores a program or instructions executable on the processor, and when the program or instructions are executed by the processor, the steps of the image processing method according to any one of claims 1 to 7 are implemented.

16. A readable storage medium, wherein the readable storage medium stores a program or instructions, and when the program or instructions are executed by a processor, the steps of the image processing method according to any one of claims 1 to 7 are implemented.

17. A computer program product, wherein the computer program product is stored in a storage medium, and the computer program product is executed by at least one processor to implement the image processing method according to any one of claims 1 to 7.

18. A chip, wherein the chip comprises a processor and a communication interface, the communication interface is coupled to the processor, and the processor is configured to run a program or instructions to implement the image processing method according to any one of claims 1 to 7.

An image data processing apparatus groups image data streams of a first image

S201

For each group of the image data streams, the image data processing apparatus generates a read address in a case that a group of image data is written into a corresponding storage space

S202

The image data processing apparatus reads each image data in the group of the image data from the storage space according to the read address, and writes a next group of image data into the storage space from which the image data has been read

S203

FIG. 1

| P11 | Y0_0 | Y0_1 | Y0_2 | Y0_3 | Y0_4 | Y0_5 | Y0_6 | Y0_7 | ... | Y0_1919 |
| P21 | Y1_0 | Y1_1 | Y1_2 | Y1_3 | Y1_4 | Y1_5 | Y1_6 | Y1_7 | ... | Y1_1919 |
| P31 | Y2_0 | Y2_1 | Y2_2 | Y2_3 | Y2_4 | Y2_5 | Y2_6 | Y2_7 | ... | Y2_1919 |
| P41 | Y3_0 | Y3_1 | Y3_2 | Y3_3 | Y3_4 | Y3_5 | Y3_6 | Y3_7 | ... | Y3_1919 |
| P51 | Y4_0 | Y4_1 | Y4_2 | Y4_3 | Y4_4 | Y4_5 | Y4_6 | Y4_7 | ... | Y4_1919 |
| P61 | Y5_5 | Y5_1 | Y5_2 | Y5_3 | Y5_4 | Y5_5 | Y5_6 | Y5_7 | ... | Y5_1919 |
| P71 | Y6_6 | Y6_1 | Y6_2 | Y6_3 | Y6_4 | Y6_5 | Y6_6 | Y6_7 | ... | Y6_1919 |
| P81 | Y7_7 | Y7_1 | Y7_2 | Y7_3 | Y7_4 | Y7_5 | Y7_6 | Y7_7 | ... | Y7_1919 |
| | ... | ... | ... | ... | ... | ... | ... | ... | ... | ... |

FIG. 2(A)

First cycle (write only)

| Content (N=240) | P11 | P12 | ... | P1N | P21 | P22 | ... | P2N | P31 | P32 | ... | P3N | ... | P81 | P82 | ... | P8N |
|---|---|---|---|---|---|---|---|---|---|---|---|---|---|---|---|---|---|
| address | 0 | 1 | ... | 239 | 240 | 241 | ... | 479 | 480 | 481 | ... | 719 | ... | 1680 | 1681 | ... | 1919 |

Second cycle (write after read)

| address | 0 | 240 | 480 | 720 | 960 | 1200 | 1440 | 1680 | ... | 239 | 479 | 719 | 959 | 1199 | 1439 | 1679 | 1919 |
|---|---|---|---|---|---|---|---|---|---|---|---|---|---|---|---|---|---|

Third cycle (write after read)

| address | 0 | 30 | 60 | 90 | 120 | 150 | 180 | 210 | ... | 1709 | 1739 | 1769 | 1799 | 1829 | 1859 | 1889 | 1919 |
|---|---|---|---|---|---|---|---|---|---|---|---|---|---|---|---|---|---|

...

FIG. 2(B)

FIG. 3

FIG. 4

FIG. 5

FIG. 6

FIG. 7

## INTERNATIONAL SEARCH REPORT

| International application No. |
| --- |
| **PCT/CN2024/106528** |

### A. CLASSIFICATION OF SUBJECT MATTER

H04N23/80(2023.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, ENTXTC: 图像, 像素, 写入, 读取, 读出, 地址, 行, 块, 存储, 储存, 数量, 个数; VEN, ENTXT: image, pixel, write, read, address, line, block, memory, storage, amount

### C. DOCUMENTS CONSIDERED TO BE RELEVANT

| Category* | Citation of document, with indication, where appropriate, of the relevant passages | Relevant to claim No. |
| --- | --- | --- |
| PX | CN 117255256 A (VIVO COMMUNICATION TECHNOLOGY CO., LTD.) 19 December 2023 (2023-12-19)<br>claims 1-16, and description, paragraphs [0010]-[0011] | 1-18 |
| X | CN 106101712 A (ZHEJIANG DAHUA TECHNOLOGY CO., LTD.) 09 November 2016 (2016-11-09)<br>description, paragraphs [0033]-[0058] and [0068]-[0071] | 1, 7, 8, 14-18 |
| A | CN 116033092 A (VIMICRO CO., LTD. et al.) 28 April 2023 (2023-04-28)<br>entire document | 1-18 |
| A | US 2004100661 A1 (MATSUSHITA ELECTRIC INDUSTRIAL CO., LTD.) 27 May 2004 (2004-05-27)<br>entire document | 1-18 |
| A | US 2017206629 A1 (CANON K. K.) 20 July 2017 (2017-07-20)<br>entire document | 1-18 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 November 2024** | **03 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/106528**

| Patent document cited in search report | | | Publication date (day/month/year) | Patent family member(s) | | | Publication date (day/month/year) |
|---|---|---|---|---|---|---|---|
| CN | 117255256 | A | 19 December 2023 | None | | | |
| CN | 106101712 | A | 09 November 2016 | None | | | |
| CN | 116033092 | A | 28 April 2023 | None | | | |
| US | 2004100661 | A1 | 27 May 2004 | JP | 2004040260 | A | 05 February 2004 |
| | | | | JP | 4015890 | B2 | 28 November 2007 |
| | | | | US | 7352494 | B2 | 01 April 2008 |
| US | 2017206629 | A1 | 20 July 2017 | US | 10510135 | B2 | 17 December 2019 |
| | | | | JP | 2017129918 | A | 27 July 2017 |
| | | | | JP | 6757141 | B2 | 16 September 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310914113